# FASCICULE DE BREVET EUROPEEN

(11) **EP 2 599 614 B1**
(45) Date de publication et mention de la délivrance du brevet: **02.03.2016**
(21) Numéro de dépôt: 11191540.1
(22) Date de dépôt: 01.12.2011
(51) Int. Cl.: B29C 70/08, B29C 70/46, B29C 70/54, B29B 11/16, B29C 70/20, B29K 101/12

(54) **Procédé de réalisation d'une préforme et son utilisation dans la fabrication d'une pièce composite**
Verfahren zur Herstellung eines Vorformlings und seine Verwendung bei der Herstellung eines Verbundteils
Method for manufacturing a preform and its use in the manufacture of a composite part

(43) Date de publication de la demande: 05.06.2013
(73) Titulaire: Techspace Aero S.A., 4041 Milmort (BE)
(72) Inventeur: Grelin, Hervé, F-89340 VILLEBLEVIN (FR)
(74) Mandataire: Pronovem

(56) Documents cités:
- EP-A1- 1 923 192
- EP-A1- 2 090 423
- EP-A2- 0 873 849
- WO-A1-02/45932
- ANONYMOUS: "Erläuterung zur TFP-Technologie", INTERNET CITATION, 7 mars 2005 (2005-03-07), XP002400709, Extrait de l'Internet: URL:http://www.hightex-dresden.de/tfptech. pdf [extrait le 2006-09-27]

## Description

### Objet de l'invention

La présente invention se rapporte à un procédé de réalisation d'une préforme pour composite à matrice thermoplastique. Elle se rapporte plus particulièrement à un procédé de réalisation d'une préforme selon le processus TFP (Tailored Fiber Placement) incluant une ou plusieurs étapes de dépôt d'une résine thermoplastique.

### Etat de la technique

Dans l'industrie aéronautique, un procédé très utilisé pour réaliser des pièces en matériau composite est le drapage qui consiste à empiler des tissus pré-imprégnés de résine.

Le drapage de fibres, par exemple de fibres de carbone, est d'autant plus efficace que l'on utilise des orientations qui ne sont pas limitées aux angles classiques ±45°, 0° ou 90°. Pour obtenir ces drapages originaux, on utilise classiquement des pré-imprégnés unidirectionnels époxy qui sont maintenus en place grâce à la pégosité de la résine thermodurcissable non réticulée.

Pour les empilages à matrice thermoplastique, il est beaucoup plus compliqué de réaliser des drapages de fibres unidirectionnelles car il faut fixer les plis entre eux. On effectue cette action soit en utilisant des plaques pré-consolidées qu'il faut ensuite thermoformer, soit en fixant les plis les uns aux autres à l'aide de points de soudure entraînant une fusion locale de la matrice. Dans les deux cas, une fois les plis liés entre eux la structure est très difficile à mettre en forme en maîtrisant l'orientation des fibres.

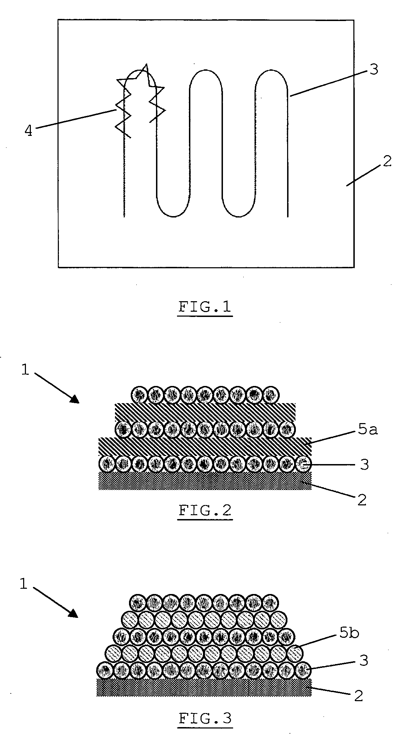

Il existe une alternative au placement de fibres n'utilisant pas la résine pour maintenir les fibres en place. Dans cette alternative, les fibres sont cousues avec un fil en zigzag qui les maintient en place les unes par rapport aux autres. Pour fonctionner, ce procédé, appelé TFP (Tailored Fiber Placement) et schématisé à la figure 1, utilise un substrat pour assurer le retour des fils. La préforme ainsi réalisée est ensuite habituellement transformée en composite au travers d'un processus d'imprégnation/réticulation de type RTM (Resin Transfer Moulding). A ce jour, les préformes sont majoritairement imprégnées avec une résine époxy, c'est-à-dire une résine thermodurcissable.

Le procédé TFP est, par exemple, décrit dans les documents EP 1 339 534 B1 et EP 1 907 195 B1.

Dans le document EP 1 339 534 B1, les fibres de renfort sont cousues sur un substrat à l'aide d'un fil de fixation fusible chimiquement ou thermiquement. La fusion du fil peut se faire pendant le processus d'imprégnation et de durcissement par réaction chimique avec la résine utilisée pour l'imprégnation ou sous l'action de la chaleur pendant le processus d'imprégnation et de durcissement.

Dans le document EP 1 907 195 B1, une couche de séparation est disposée entre le substrat et l'ébauche de fibre. Cette couche permet de retirer plus aisément le substrat après la réalisation de la préforme. Selon ce document, les fils de fixation sont également fusibles par apport de chaleur mais l'étape de fusion se déroule avant l'étape d'imprégnation et de réticulation par le procédé RTM.

On connaît aussi du document EP 2 090 423 A1 un procédé de fabrication d'un composite thermoplastique. qui consiste à empiler des panneaux. Chaque panneau est composé d'une structure de fibres de renforcement sous forme de feuille et d'une couche de résine thermoplastique. Les panneaux sont ensuite cousus ensemble à l'aide d'un faisceau de fibres de résine identique à celle des couches des panneaux.

### Buts de l'invention

La présente invention vise à fournir une variante aux procédés existants, consacrée à la réalisation de pièces composites à matrice thermoplastique.

La présente invention vise plus particulièrement à intégrer l'étape d'imprégnation dans le processus TFP de fabrication de la préforme.

La présente invention vise ainsi à réaliser une préforme imprégnée par une résine thermoplastique, qui reste malléable.

### Principaux éléments caractéristiques de l'invention

La présente invention se rapporte à un procédé de réalisation d'une préforme pour un composite à matrice thermoplastique, ladite préforme comportant une ou plusieurs couches de fibres de renforcement cousue(s) sur un support à l'aide d'au moins un fil de fixation, caractérisé en ce que le procédé comporte une ou plusieurs étape(s) de dépôt d'une couche de résine thermoplastique sur le support ou sur une couche de fibres de renforcement.

Selon des modes particuliers de l'invention, le procédé comporte au moins une ou une combinaison appropriée des caractéristiques suivantes:
- la préforme comporte une alternance de couches de résine thermoplastique et de couches de fibres de renforcement ;
- la couche de résine comporte des fils thermoplastiques ou un premier film thermoplastique ;
- les fils thermoplastiques sont cousus sur le support à l'aide du fil de fixation, et, le premier film thermoplastique est fixé au support ou à une couche de fibres de renforcement par fusion locale ;
- les fibres de renforcement au sein de chaque couche sont orientées dans une même direction ;
- l'orientation et/ou la nature des fibres de renforcement est différente d'une couche à une autre ;
- le support est un second film thermoplastique, un tissu composite ou un tissu métallique ;
- un troisième film thermoplastique est disposé sur une face ou les deux faces du support en tissu composite ou en tissu métallique ;
- le fil de fixation est en carbone, en verre, en aramide, en basalte ou en résine thermoplastique ;
- le fil de fixation a une température de fusion supérieure de 20°, et, de préférence de 40°, à la température de fusion de la résine constituant la couche de résine ou le fil de fixation est constitué d'une résine de même nature que la résine de la couche de résine ;
- la résine du second et/ou du troisième film thermoplastique est de même nature que la résine constituant la couche de résine ;
- les fils thermoplastiques ont la même orientation que les fibres de renforcement ;
- le nombre de couches de fibres de renforcement et de couches de résine au sein de ladite préforme est variable selon la forme à réaliser.

La présente invention se rapporte également à un procédé de réalisation d'une pièce composite à matrice thermoplastique comprenant les étapes de réalisation d'une préforme telles que décrites ci-dessus et une étape de chauffage de ladite préforme.

Finalement, la présente invention se rapporte aussi à une pièce composite à matrice thermoplastique susceptible d'être obtenue selon le procédé décrit ci-dessus.

### Brève description des figures

La figure 1 représente de manière connue selon le processus TFP, l'étape de fixation de la fibre de renforcement à l'aide d'un fil de fixation cousu en zigzag sur un support.

La figure 2 représente une vue schématique en coupe de la préforme selon une première forme de réalisation de l'invention. La préforme comporte un substrat et une alternance de couches de torons de fibres et de films thermoplastiques.

La figure 3 représente une vue schématique en coupe de la préforme selon une seconde forme de réalisation de l'invention. La préforme comporte un substrat et une alternance de couches de torons de fibres et de fils thermoplastiques.

### Légende:

(1) Préforme
(2) Support
(3) Fibre de renforcement
(4) Fil de fixation
(5) Résine thermoplastique
   (a) Sous forme de film
   (b) Sous forme de fils

### Description détaillée de l'invention

La présente invention se rapporte à un procédé de réalisation d'une préforme imprégnée de résine thermoplastique. La préforme ainsi réalisée peut être utilisée pour la fabrication de pièces composites dans tout domaine d'activité et, entre autres, pour la fabrication de pièces aéronautiques.

Selon la présente invention, l'imprégnation par la résine s'effectue lors de la fabrication de la préforme.

Tel qu'illustré à la figure 1, la fibre sèche unidirectionnelle 3 est cousue avec un fil de fixation 4 en zigzag sur un support 2 et, ce, de manière connue selon le processus TFP. Ensuite, tel que montré aux figures 2 et 3, une couche de résine thermoplastique 5a,5b est déposée sur la couche de fibres 3. Une couche de fibres sèches unidirectionnelles est ensuite à nouveau déposée et cousue, le fil de fixation étant repiqué sur l'ensemble des couches jusqu'au support. Les couches de résine et de fibres sont ainsi alternativement déposées jusqu'au nombre de couches désiré.

La couche de résine peut se présenter sous forme d'un film thermoplastique 5a comme à la figure 2 ou sous forme de fils thermoplastiques 5b comme à la figure 3.

Dans le cas du film, ce dernier est découpé à la dimension du pli de fibres à imprégner. Après positionnement du pli de fibres à l'aide d'outils garantissant la position (gabarit, laser), le film est fixé à l'aide de points chauds.

De façon à automatiser le procédé et à ne pas devoir rapporter des films avec les problèmes de placement inhérents, on peut remplacer le film par des fils thermoplastiques qui sont cousus en place tout comme la fibre. Ainsi, la couche de fibres est cousue et la couche suivante de fils thermoplastiques est également cousue, et ainsi de suite. Préférentiellement, les fils thermoplastiques sont disposés dans une même direction que les fibres de renforcement.

Dans les exemples illustrés aux figures 2 et 3, la dernière couche déposée est une couche de fibres mais il peut s'agir également d'une couche de résine ou éventuellement d'une protection. De même, la première couche déposée sur le support peut être une couche de résine ou une couche de fibres de renforcement et ce, selon la nature du support. De préférence, une couche de résine alterne avec une couche de fibres mais la présente invention couvre également le cas de figure où plusieurs couches de fibres sont déposées avant de déposer une ou plusieurs couches de résine (ou l'inverse). On précisera également qu'en fonction de la forme à réaliser (par ex., une pale d'une aube), le nombre de couches peut également varier au sein d'une même préforme.

Après la fabrication de la préforme, la consolidation de cette dernière pour réaliser la pièce composite s'effectue par une méthode classique de compactage compression avec chauffage et fusion de la matrice thermoplastique.

Le support de la préforme peut être un film thermoplastique. De préférence, la résine thermoplastique est la même que celle de la matrice afin d'avoir une parfaite compatibilité. Toujours de préférence, la résine thermoplastique est une résine à haute performance thermique telle que le PPS (Polysulfure de phénylène), le PEI (Polyétherimide), le PEEK (Polyétheréthercétone), le PEKK (Polyéthercétonecétone), etc. En variante, le support peut être un tissu composite, un tissu métallique ou tout autre tissu permettant le retour du fil de fixation. Selon cette variante et pour que le support soit complètement solidaire du reste de la pièce réalisée, le support est imprégné de matière plastique, par exemple, en disposant un film thermoplastique sur une ou les deux faces du support. La résine du film est également préférentiellement de même nature que la résine d'imprégnation.

Selon la présente invention, les fils de fixation peuvent être des fils thermoplastiques de même nature que la matrice du composite. En variante, les fils de fixation sont des fils thermoplastiques ayant un point de fusion plus élevé que la matrice thermoplastique pour éviter le problème de la fusion et du mélange local. Ledit point de fusion doit être au moins supérieur de 20°, et de préférence, au moins supérieur de 40°, à la température de fusion de la matrice thermoplastique. Selon une autre variante, les fils de fixation sont des fils de verre, de carbone, d'aramide (Kevlar®) ou de basalte.

Les fibres de renforcement peuvent être, par exemple, des fibres de carbone ou des torons de fibres de carbone. La nature des fibres ainsi que l'orientation des fibres peuvent être changées d'une couche à l'autre.

### Avantages de l'invention

Le procédé selon l'invention a pour avantage d'utiliser une matrice thermoplastique tout en gardant une préforme déformable.

La fiabilité et la reproductibilité de ce procédé repose sur une répartition maîtrisée de la résine et des fibres. Une bonne localisation des fibres de carbone et de la résine sous forme de fils ou de films mène à un taux volumique et une imprégnation acceptable et donc des propriétés mécaniques connues et maîtrisées.

Le procédé selon l'invention permet ainsi de fabriquer des pièces à matrice thermoplastique avec un drapage maîtrisé et souple en termes d'orientation de fibres (précision de l'ordre de 1.5°).

Le procédé selon l'invention peut être automatisé.

La cadence de production est supérieure à celle d'un procédé utilisant le processus RTM pour l'imprégnation et la réticulation car le temps de cycle incluant le durcissement est inférieur pour le procédé selon l'invention.

## Revendications

1. Procédé de réalisation d'une préforme (1) pour un composite à matrice thermoplastique, ladite préforme (1) comportant plusieurs couches de fibres de renforcement (3) et un support (2), lesdites fibres de renforcement (3) étant cousues sur ledit support (2) à l'aide d'au moins un fil de fixation (4) en zigzag, **caractérisé en ce que** le procédé comporte une étape de dépôt d'une couche de résine thermoplastique (5b) sur une couche de fibres de renforcement (3) préalablement cousues sur le support (2) à l'aide dudit fil de fixation (4) en zigzag, une couche de résine thermoplastique (5b) et une couche de fibres de renforcement (3) étant alternativement déposées jusqu'au nombre de couches désiré, ladite couche de résine comportant des fils thermoplastiques (5b) cousus sur le support (2) à l'aide du fil de fixation (4) avant dépôt de la couche suivante de fibres de renforcement (3).

2. Procédé selon la revendication 1, **caractérisé en ce que** les fibres de renforcement (3) au sein de chaque couche sont orientées dans une même direction.

3. Procédé selon l'une quelconque des revendications précédentes, **caractérisé en ce que** l'orientation et/ou la nature des fibres de renforcement (3) est différente d'une couche à une autre.

4. Procédé selon l'une quelconque des revendications précédentes, **caractérisé en ce que** le support (2) est un premier film thermoplastique, un tissu composite ou un tissu métallique.

5. Procédé selon la revendication 4, **caractérisé en ce qu'**un deuxième film thermoplastique est disposé sur une face ou les deux faces du support (2) en tissu composite ou en tissu métallique.

6. Procédé selon l'une quelconque des revendications précédentes, **caractérisé en ce que** le fil de fixation (4) est en carbone, en verre, en aramide, en basalte ou en résine thermoplastique.

7. Procédé selon la revendication 6, **caractérisé en ce que** le fil de fixation (4) a une température de fusion supérieure de 20°, et, de préférence de 40°, à la température de fusion de la résine constituant la couche de résine (5b) ou **en ce que** le fil de fixation (4) est constitué d'une résine de même nature que la résine de la couche de résine (5b).

8. Procédé selon l'une quelconque des revendications 4 à 7, **caractérisé en ce que** la résine du premier et/ou du second film thermoplastique est de même nature que la résine constituant la couche de résine (5a, 5b).

9. Procédé selon l'une quelconque des revendications précédentes, **caractérisé en ce que** les fils thermoplastiques (5b) ont la même orientation que les fibres de renforcement (3).

10. Procédé selon l'une quelconque des revendications précédentes, **caractérisé en ce que** le nombre de couches de fibres de renforcement (3) et de couches de résine (5a,5b) au sein de ladite préforme (1) est variable selon la forme à réaliser.

11. Procédé de réalisation d'une pièce composite à matrice thermoplastique comprenant les étapes de réalisation d'une préforme (1) selon l'une quelconque des revendications 1 à 10 et une étape de chauffage de ladite préforme (1).

## Patentansprüche

1. Verfahren zur Herstellung eines Vorformlings (1) für ein Verbundteil mit thermoplastischer Matrix, wobei der Vorformling (1) mehrere Schichten von Verstärkungsfasern (3) und eine Unterlage (2) aufweist, wobei die Verstärkungsfasern (3) auf der Unterlage (2) mit Hilfe von mindestens einem Befestigungsfaden (4) im Zickzack vernäht sind, **dadurch gekennzeichnet, dass** das Verfahren einen Schritt des Aufbringens einer thermoplastischen Harzschicht (5b) auf eine Schicht zuvor auf der Unterlage (2) mit Hilfe des Befestigungsfadens (4) im Zickzack vernähter Verstärkungsfasern (3) aufweist, wobei eine thermoplastische Harzschicht (5b) und eine Schicht Verstärkungsfasern (3) abwechselnd bis zur gewünschten Schichtanzahl aufgebracht sind, wobei die Harzschicht thermoplastische Fäden (5b) aufweist, die auf der Unterlage (2) mit Hilfe des Befestigungsfasens (4) vordem Aufbringen der folgenden Schicht Verstärkungsfasern (3) vernäht werden.

2. Verfahren nach Anspruch 1, **dadurch gekennzeichnet, dass** die Verstärkungsfasern (3) innerhalb jeder Schicht in eine selbe Richtung ausgerichtet sind.

3. Verfahren nach einem der vorangehenden Ansprüche, **dadurch gekennzeichnet, dass** die Ausrichtung und/oder die Art der Verstärkungsfasern (3) von einer Schicht zu einer anderen unterschiedlich ist.

4. Verfahren nach einem der vorangehenden Ansprüche, **dadurch gekennzeichnet, dass** die Unterlage (2) eine erste thermoplastische Folie, ein Verbundgewebe oder ein Metallgewebe ist.

5. Verfahren nach Anspruch 4, **dadurch gekennzeichnet, dass** eine zweite thermoplastische Folie auf einer Seite oder auf den zwei Seiten der Unterlage (2) aus Verbundgewebe oder Metallgewebe angeordnet ist.

6. Verfahren nach einem der vorangehenden Ansprüche, **dadurch gekennzeichnet, dass** der Befestigungsfaden (4) aus Karbon, aus Glas, aus Aramid, aus Basalt oder aus thermoplastischem Harz ist.

7. Verfahren nach Anspruch 6, **dadurch gekennzeichnet, dass** der Befestigungsfaden (4) eine Schmelztemperatur über 20° und vorzugsweise 40° als die Schmelztemperatur des Harzes hat, das die Harzschicht (5b) bildet, oder dass der Befestigungsfaden (4) aus einem Harz derselben Art wie das Harz der Harzschicht (5b) besteht.

8. Verfahren nach einem der Ansprüche 4 bis 7, **dadurch gekennzeichnet, dass** das Harz der ersten und/oder der zweiten thermoplastischen Folie derselben Art ist wie das Harz, das die Harzschicht (5a, 5b) bildet.

9. Verfahren nach einem der vorangehenden Ansprüche, **dadurch gekennzeichnet, dass** die thermoplastischen Fäden (5b) dieselbe Ausrichtung wie die Verstärkungsfasern (3) haben.

10. Verfahren nach einem der vorangehenden Ansprüche, **dadurch gekennzeichnet, dass** die Anzahl der Schichten Verstärkungsfasern (3) und der Harzschichten (5a, 5b) innerhalb des Vorformlings (1) je nach herzustellender Form variabel ist.

11. Herstellungsverfahren eines Verbundteils mit thermoplastischer Matrix, das die Schritte der Herstellung eines Vorformlings (1) nach einem der Ansprüche 1 bis 10 und einen Erwärmungsschritt des Vorformlings (1) umfasst.

## Claims

1. A method for making a preform (1) for a composite with a thermoplastic matrix, said preform (1) comprising several layers of reinforcement fibers (3) and a support (2), said reinforcement fibers being sewn on said support (2) by means of at least one attachment yarn (4) in zigzag, **characterized in that** the method comprises one step for depositing a layer of thermoplastic resins (5b) sewn beforehand on the support (2) by means of said attachment yarn (4) in zigzag, a layer of thermoplastic resin (5b) and a layer of reinforcement fibers (3) being alternately deposited until the desired number of layers is obtained, said layer of resin comprising thermoplastic yarns (5b) sewn on the support (2) by means of the attachment yarn (4) before depositing the following layer of reinforcement fibers (3).

2. The method according to claim 1, **characterized in that** the reinforcement fibers (3) within each layer are oriented in a same direction.

3. The method according to any one of the preceding claims, **characterized in that** the orientation and/or nature of the reinforcement fibers (3) is different from one layer to the other.

4. The method according to any one of the preceding claims, **characterized in that** the support (2) is a first thermoplastic film, a composite fabric or a metal fabric.

5. The method according to claim 4, **characterized in that** a second thermoplastic film is positioned on one face or on both faces of the support (2) in composite fabric or in metal fabric.

6. The method according to any one of the preceding claims, **characterized in that** the attachment yarn (4) is in carbon, glass, aramide, basalt or thermoplastic resin.

7. The method according to claim 6, **characterized in that** the attachment yarn (4) has a melting temperature greater by 20°, preferably by 40°, than the melting temperature of the resin forming the resin layer (5b) or **in that** the attachment yarn (4) is made of a resin of the same nature as that of the resin layer (5b).

8. The method according to any of claims 4 to 7, **characterized in that** the resin of the first and/or second thermoplastic film is of the same nature as that of the resin layer (5a,5b).

9. The method according to any one of the preceding claims, **characterized in that** the thermoplastic yarns (5b) have the same orientation as the reinforcement fibers (3).

10. The method according to any one of the preceding claims, **characterized in that** the number of reinforcement-fiber layers (3) and of resin layers (5a,5b) within said preform (1) is variable depending on the shape to be made.

11. A method for making a composite part with a thermoplastic matrix comprising the steps for making a preform (1) according to any one of claims 1 to 10 and a step for heating said preform (1).
